# EUROPEAN PATENT SPECIFICATION

(11) **EP 4 508 425 B1**
(45) Date of publication and mention of the grant of the patent: **19.08.2026**
(21) Application number: 23728229.8
(22) Date of filing: 01.05.2023
(51) Int. Cl.: G01N 27/447

(54) **ASSEMBLY COMPRISING A SAMPLE WELL COMB MASK FOR PHOTOPOLYMERIZED ELECTROPHORETIC GELS**
ANORDNUNG MIT PROBENLOCHKAMMMASKE FÜR PHOTOPOLYMERISIERTE ELEKTROPHORETISCHE GELE
ENSEMBLE COMPRENANT UN MASQUE À PEIGNE POUR PUITS D'ÉCHANTILLONS POUR GELS ÉLECTROPHORÉTIQUES PHOTOPOLYMÉRISÉS

(30) Priority: 10.05.2022 US 202263364441 P
(43) Date of publication of application: 19.02.2025
(73) Proprietor: EMD Millipore Corporation, Burlington, MA 01803 (US)
(72) Inventor: GREENIZEN, Kurt E., Burlington, Massachusetts 01803 (US); BAILEY, Trisha, Burlington, Massachusetts 01803 (US); AMARA, Ryan, Burlington, Massachusetts 01803 (US); LIBBY, Gerard, Burlington, Massachusetts 01803 (US); SYDLOWSKI, Paul, Burlington, Massachusetts 01803 (US); JIMENEZ, Mayra, Burlington, Massachusetts 01803 (US)
(74) Representative: Graham Watt & Co
(86) International application number: PCT/US2023/066434
(87) International publication number: WO 2023/220530

(56) References cited:
- WO-A1-2012/116297
- US-A- 4 790 919
- US-A- 5 288 465
- US-A1- 2009 250 347

## Description

### CROSS-REFERENCE TO RELATED APPLICATIONS

This present application claims priority to U.S. Provisional Patent Application Ser. No. 63/364,441, filed on May 10, 2022.

### BACKGROUND

### Field of the Disclosure

The use of gel electrophoresis is currently the ubiquitous technique for the separation of biological materials. Nonbiological materials can also be separated using gels or other chromatographic supports as well, but the scope of effort with regard to biologicals is greater. Typical applications include separation of nucleic acid fragments of various sizes either in the context of sequence determination; in the detection of polymorphisms; or verification of sizes in other contexts. Also frequently conducted are separations of proteins, glycoproteins, protein fragments and application of gel separations as verification of homogeneity or purity, identification of post translational modifications and confirmation of molecular weight.

In all of these procedures, mixed samples of biological entities are applied to electrophoretic gels and the components are separated by application of an electric field across the gel. Regardless of the manner in which the gel is developed, the resulting pattern of migration of the substances contained in the sample must be detected in some manner. To conduct this detection after the gel is developed, the gel is stained by incubating the gel in the stain of choice for a period of time followed by a destaining process where the destaining composition is driven by the stain choice. The stained gel's protein bands are compared to a known protein ladder included as a sample on the gel to help determine the protein of interest's molecular weight. In some instances, additional information on the protein of interest is gained by further transfer of the protein of interest followed by immunodetection. Following the staining, typically the gel support is contacted with a blotting membrane to which the substances are transferred in the same pattern in which they appeared on the gel. The "spots" are then detected, at a minimum, by blocking the membrane with a protein or detergent solution to reduce non-specific binding (which otherwise leads to a high level of noise and low level of detection). Typical blocking agents include casein, bovine serum albumin (BSA), non-fat dry milk (generally about 1-5%) in a Tris buffer saline solution with TWEEN^{®} surfactant (TBS-T solution) or phosphate buffer saline solution with TWEEN^{®} surfactant (PBS-T solution). The biological entity is then incubated with an antibody specific for the antigen on the membrane. The membrane is then extensively washed to remove any contaminants, unbound blocking proteins or antibodies and the like. The membrane is then treated and incubated with a secondary enzyme-, radioisotope-, fluorfluor-, or biotin-conjugated antibody specific for the primary antibody. The membrane is extensively washed again to remove any unbound secondary antibody. Then a detection reagent, generally a chromogenic, chemiluminescent, fluorescent, radiological, or streptavidin-labeled material, is applied which either binds to, or is a substrate of the enzyme-conjugate. Lastly, the appropriate detection device is used to determine the presence, absence, position, quantity, etc. of the biological entity.

Systems for hand casting an electrophoresis gel are commercially available and generally encompass a variety of different approaches, including single, dual and multicast systems. Most hand cast systems require the user to set up the system by assembly of a series of variable sized glass plates with spacers appropriate to the thickness of the required gel that is to be cast (e.g., 0.75 mm, 1.0 mm and 1.5 mm). The desired gel thickness may be determined by the sample volume required for the electrophoresis process. The glass plates can be very fragile and subject to chipping and breakage during cleaning, handling and/or storage. Glass is the most common material for gel hand-casting because it provides an optimal reusable interface with the acrylamide for both gel polymerization and removal. Glass plates are also less susceptible to surface damage during cleaning than other materials such as plastic. Most non-reusable or disposable hand casting systems utilize treated plastics which can be advantageous as a release surface with the cast gels. An apparatus for casting an electrophoresis slab gel is described in WO-A1-2012116297.

These systems are cumbersome to manage and require large numbers of components which must be aligned properly and loaded into a holder which mechanically compresses the glass plates together and forces the glass against a gasket or the like to prevent acrylamide from leaking out of the system and the cassette assembly. The gaskets used in these systems are of variable designs unique to the system being used. These gaskets or seals are exposed to the liquid acrylamide and often can become infused with the acrylamide, can be difficult to clean for subsequent uses, and can cause leaking issues. Loading the cassette components into the system requires precise alignment and users customarily test the assembly with deionized water to ensure there are not leaks prior to casting with acrylamide. The deionized water must be removed before casting. If leaks are detected, the assembly and cassette components must be adjusted, and the process repeated.

Once the system has been properly assembled, the first step in the casting process begins by injecting (usually by pipette) liquid acrylamide resolving gel into the cassette. In the single and dual systems, this requires the user to inject into what is a narrow opening at the top of each individual cassette. Multicast systems may allow the users to flood the entire stack simultaneously but produce an excess of acrylamide waste which must be cleaned after the process is completed.

Visibility into the cassette is important to achieve the desired height of the resolving gel which is advantageous in the single cassette systems but not achievable beyond the first couple of layers in a multicast system.

The second step in the casting process involves injecting the acrylamide stacking gel into each cassette, again usually by pipette. This also requires the user to inject into the narrow opening at the top of each individual cassette. Once the stacking gel has been introduced into the cassette, the user inserts a sample well comb matched to the gel thickness. To enable the comb to be inserted into the cassette, the comb teeth which form the sample wells are slightly thinner than the space between the glass plates which forms the desired gel thickness. The combs are constructed with a number of teeth to form wells, the number of which is based on sample size and desired well volumes (common configurations are 10, 12 and 15 wells). While inserting the comb, it is important for it to be centered from side to side with respect to the cassette and remain secure both during and after the stacking gel cures. It is also important that the comb can be removed (for electrophoresis sample loading) without disruption of the polymerized wells. Traditionally, any acrylamide solution occupying the space between the glass plates and the comb does not cure and is rinsed out after removing the comb before sample introduction for the electrophoresis process.

Acrylamide resolving and stacking gels often take 30-45 minutes to cure each depending on the reagents and their concentrations. As a result, modification of the reagents and concentrations has been demonstrated to allow for photopolymerization of the electrophoresis gels significantly cutting down on curing times for the user. However, when an acrylamide stacking gel is cured using photopolymerization, any stacking gel solution that may reside between the comb teeth and the glass may cure into a thin film within the wells, introducing variations into the sample wells from well to well and finished gel to gel as well as making it possible to damage the polymerized wells when removing the comb.

It would be desirable to provide a masking device, either reusable or a onetime use masking device, to a gel casting assembly during photoinitiated light curing of the gel which improves the process of photopolymerizing electrophoresis gels as well as the fidelity of the wells after photopolymerization.

It is therefore an object of embodiments disclosed herein to provide a component or device that is either external or internal to the gel casting assembly's fluid path and permanently attached or removably attached which provides a mask for sample well comb teeth and prevents any residual stacking solution between the inner glass surface and the comb teeth from curing during the light curing process.

It is another object of embodiments disclosed herein to provide improved fidelity and consistency of the gel sample wells.

It is yet another object of embodiments disclosed herein to intuitive interaction for curing a gel using a gel casting assembly.

These and other objects are achieved by the embodiments disclosed herein.

### SUMMARY

disclosed is a masking device for enhancing the fidelity of sample wells of a photopolymerized electrophoretic gel contained in a cassette frame of a gel casting assembly.

A masking device is disclosed for enhancing the fidelity of sample wells of a photopolymerized electrophoretic gel contained in a gel casting assembly that includes a comb having one or more comb teeth, the masking device including a light blocking agent fixedly located on the gel casting assembly, wherein the light blocking agent overlaps with the comb teeth to prevent photopolymerization of any portion of an electrophoretic gel contained between the comb teeth and the inner surfaces of the gel casting assembly, and where upon removal of the comb after photopolymerization of the electrophoretic gel, the sample wells remain uniform.

In certain embodiments, the light blocking agent includes one or more teeth that are configured to align the one or more comb teeth, and wherein the one or more teeth of the light blocking agent prevent photopolymerization of a portion of the electrophoretic gel contained between the comb teeth and the inner surfaces of the gel casting assembly.

In certain embodiments, the comb is removably located in or on the gel casting assembly.

In certain embodiments, the masking device is reusable.

In certain embodiments, the comb has 10, 12, or 15 teeth.

In certain embodiments, the masking device is sized to provide a friction fit with the gel cassette assembly.

In certain embodiments, the masking device further comprises a film attached to the gel cassette assembly for further inhibiting photopolymerization of the electrophoretic gel.

In certain embodiments, the masking device is attached to the gel cassette assembly by adhesive or electroadhesion.

In certain embodiments, the masking device is mechanically attached to the gel cassette assembly.

In certain embodiments, the film is made from a transparent or opaque material such as metal, cardboard, or plastic.

Disclosed is a masking device for enhancing the fidelity of sample wells of a photopolymerized electrophoretic gel comprising a light blocking device coupled to a gel casting assembly, wherein the light blocking device prevents any photopolymerization of a portion of the electrophoretic gel by preventing light from reaching an interior portion of the gel casting assembly.

In certain embodiments, the light blocking device blocks ultra-violet light.

In certain embodiments, the light blocking device is a light blocking film, a coating, or an etching on or in the gel casting assembly.

In some embodiments, the light blocking device is a polyester, acrylic, color filter film, or polarizing film.

In some embodiments, the light blocking device is a printed ultra-violet blocking epoxy mask.

In certain embodiments, the light blocking device is a vapor deposited optical coating.

In certain embodiments, the light blocking device is a laser or acid etched pattern.

In certain embodiments, the masking device has a comb with a plurality of comb teeth where the light blocking device blocks light from reaching the plurality of comb teeth.

Disclosed is a method of curing a photopolymerized electrophoretic gel comprising coupling a masking device to a gel casting assembly, injecting a liquid acrylamide resolving gel into the gel casting assembly, further injecting a photopolymerizable acrylamide stacking gel into the gel casting assembly on top of the resolving gel, curing the resolving gel and stacking gel using photopolymerization, and wherein the masking device prevents photopolymerization of the stacking gel inside a portion of the gel casting assembly in order to enhance a fidelity of sample wells of the photopolymerized electrophoretic gel in the gel casting assembly..

In certain embodiments, methods further comprise locating the masking device on the outside of the gel casting assembly.

In certain embodiments, methods further comprise locating the masking device within the gel casting assembly.

### BRIEF DESCRIPTION OF THE DRAWINGS

The apparatuses, assemblies, devices, and components presented herein may be better understood with reference to the following drawings and description. It should be understood that some elements in the figures may not necessarily be to scale and that emphasis has been placed upon illustrating the principles disclosed herein. In the figures, like-referenced numerals designate corresponding and/or comparable components/elements throughout the different views.
FIG. 1 illustrates a perspective view of a gel casting assembly in accordance with an example embodiment of the present disclosure, the gel casting assembly having an inserted comb and a masking device attached to the outside of the gel casting assembly.
FIG. 2 illustrates an exploded view of the gel casting assembly illustrated in FIG. 2, where the masking device is attached to the gel casting assembly.
FIG. 3 illustrates a perspective view of a gel casting assembly in accordance with a second example embodiment of the present disclosure, the gel casting assembly having an inserted comb and a removable masking device attached to the outside of the gel casting assembly.
FIG. 4 illustrates an exploded view of the gel casting assembly illustrated in FIG. 3.
FIG. 5 illustrates a perspective view of the masking device illustrated in FIGS. 1 and 2, and in accordance with the first embodiment of the disclosure.
FIG. 6 illustrates an isolated perspective view of the molded clip-on masking device illustrated in FIGS. 3 and 4, and in accordance with the second embodiment of the present disclosure.
FIG. 7 illustrates a perspective view of another embodiment of a formed clip-on masking device in accordance with the present disclosure.
FIG. 8 illustrates a perspective view of an example embodiment of a comb holder clip-on masking device in accordance with the present disclosure.
FIG. 9 illustrates a flowchart of a method for curing a photopolymerized electrophoretic gel with a masking device and in accordance with the present disclosure.

### DETAILED DESCRIPTION

In the following detailed description, reference is made to the accompanying figures which form a part hereof wherein like numerals designate like parts throughout, and in which is shown, by way of illustration, embodiments that may be practiced. It is to be understood that other embodiments may be utilized, and structural or logical changes may be made without departing from the scope of the present disclosure. Therefore, the following detailed description is not to be taken in a limiting sense, and the scope of embodiments is defined by the appended claims.

Various operations may be described as multiple discrete actions or operations in turn, in a manner that is most helpful in understanding the claimed subject matter. However, the order of description should not be construed as to imply that these operations are necessarily order dependent. In particular, these operations may not be performed in the order of presentation. Operations described may be performed in a different order than the described embodiment. Various additional operations may be performed and/or described operations may be omitted in additional embodiments.

For the purposes of the present disclosure, the phrase "A and/or B" means (A), (B), or (A and B). For the purposes of the present disclosure, the phrase "A, B, and/or C" means (A), (B), (C), (A and B), (A and C), (B and C), or (A, B and C).

The terms "comprising," "including," "having," and the like, as used with respect to embodiments of the present disclosure, are synonymous.

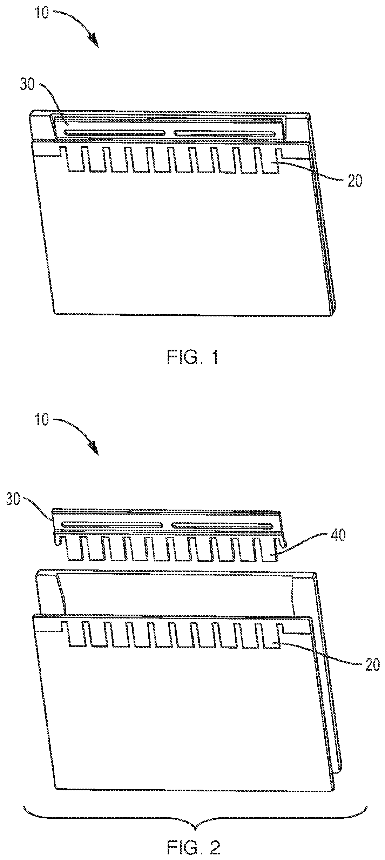

Turning now to FIGS. 1 and 2, there is shown a gel casting assembly 10 with a masking device 20 and a comb 30 containing teeth 40 in accordance with certain embodiments. The masking device 20 and the comb 30 may be constructed of one or more molded pieces chemically compatible with gel casting solutions. In certain embodiments, the masking device 20 may be permanently attached to the gel casting assembly 10, while in other embodiments, the masking device 20 may be removably coupled to the gel casting assembly 10.

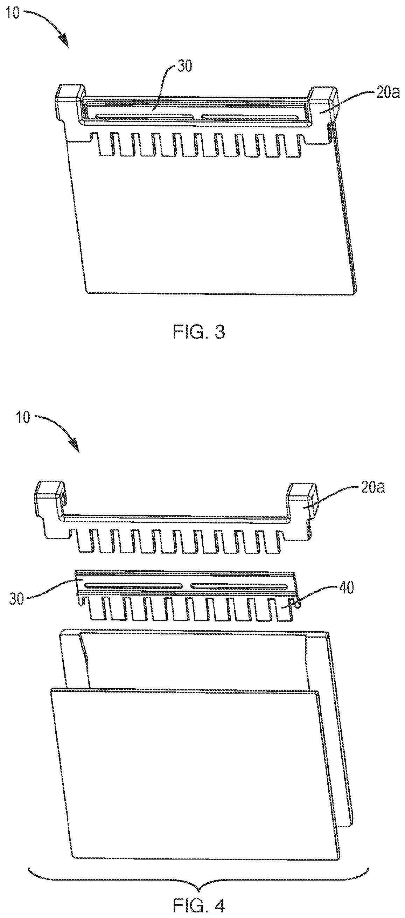

Turning now to FIGS. 3 and 4, there is shown a gel casting assembly 10 with a masking device 20a and a comb 30 containing teeth 40 in accordance with certain embodiments. The masking device 20a and the comb 30 may be constructed of one or more molded pieces chemically compatible with gel casting solutions. In certain embodiments, the masking device 20a is removably attached to the gel casting assembly 10.

In any of the embodiments show in FIGS. 1, 2, 3, or 4, the masking device 20 may be located on the outside of the gel casting assembly 10 or contained within the gel casting assembly 10 in direct contact with the photopolymerized electrophoretic gel held inside the gel casting assembly 10. Furthermore, the masking devices 20, 20a are sized in such a manner that they correspond with the comb 30 and have the same shape as the comb teeth 40 within or on the gel casting assembly 10 such that photopolymerizing light cannot pass through the masking devices 20, 20a to interact with a portion of the electrophoretic gel and thus prevent the electrophoretic gel located behind the masking devices 20, 20a from photopolymerizing. This allows for uniform wells of the electrophoretic gels to be polymerized so that when the comb 30 is removed the gel casting assembly 10, the resulting gel will not deform or tear, which, if occurred, would render the gel unusable.

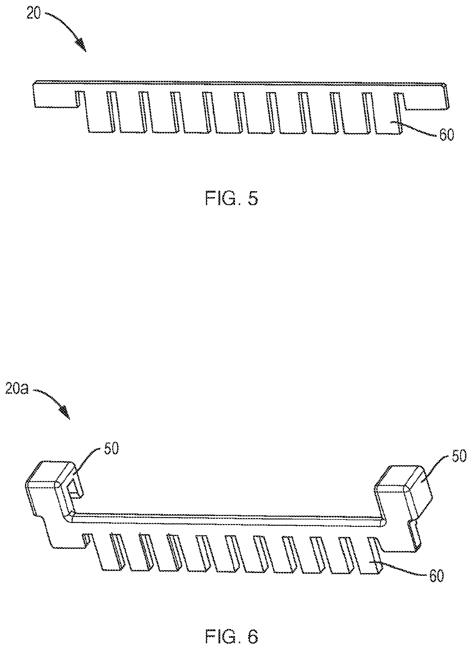

Turning to FIG. 5, illustrated is a perspective view of the masking device 20 illustrated in FIGS. 1 and 2. The masking device 20 may be constructed as a flat shape, and may be fixedly attached on the inside or the outside of the gel casting assembly 10 using an adhesive or electroadhesion. As with other embodiments, the masking device 20 as shown in FIG. 5 may have one or more teeth 60 to match the tooth configuration of the comb 30. The masking device 20 illustrated in FIG. 5 may be constructed of any material that is configured to prevent light from photopolymerizing the gel, such as, but not limited to, metal, paper, or plastic. In some embodiments, the masking device 20 may be constructed such that a user can see through the masking device 20 (i.e., the masking device 20a may be at least partially transparent) in order to ensure the user has visual confirmation when pouring gel into well areas between the teeth 40 of the gel casting assembly 10. According to certain embodiments, the masking device 20 illustrated in FIG. 5 may be screen printed onto the gel casting assembly 10. In accordance with other embodiments, the masking device 20 may be acid etched or laser etched onto the gel casting assembly 10. According to even further embodiments, the masking device 20 may be a stick-on vinyl masking device.

As illustrated in FIG. 6, the second embodiment of the masking device 20a may be made of a molded component or assembly that is capable of clipping onto or sliding onto the top of the gel casting assembly 10, like that illustrated in FIGS. 3 and 4, by means of attachment points 50. The masking device 20a may have one or more teeth 60 and preferably 10 teeth, 12 teeth, or 15 teeth to match the tooth configuration of the comb 30. The masking device 20a illustrated in FIG. 6 may be made of any material that is configured to prevent light from photopolymerizing the gel such as, but not limited to, metal, paper, or plastic. In some embodiments, the masking device 20a may be constructed such that a user can see through the masking device 20a (i.e., the masking device 20a may be at least partially transparent) in order to ensure the user has visual confirmation of the alignment between the masking device 20a and the comb 30 of the gel casting assembly 10.

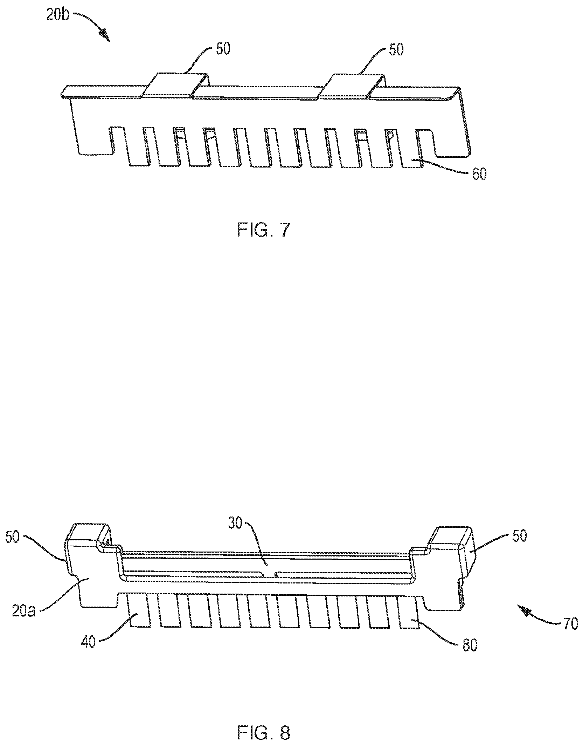

FIG. 7 shows another embodiment of the masking device 20b which may be constructed from a flat shape, and is capable of folding in portions so that the attachment points 50 be folded into place allowing the masking device 20b to be clipped onto or slide onto the top of the gel casting assembly 10. As with other embodiments, the masking device 20b as shown in FIG. 7 can have one or more teeth 60 to match the tooth configuration of the comb 30. The masking device 20b in FIG. 7 may be made of any material that is configured to prevent light from photopolymerizing the gel, such as, but not limited to, metal, paper, or plastic. In some embodiments, the masking device 20b may be constructed such that a user can see through the masking device 20b (i.e., the masking device 20a may be at least partially transparent) in order to ensure the user has visual confirmation of the alignment between the masking device 20b and the comb 30 of the gel casting assembly 10. In addition, when the masking device 20b is at least partially transparent, the user can see where to pour gel in the well areas between the teeth 40 of the gel casting assembly 10.

Turning to FIG. 8, illustrated is another embodiment of a masking device 70, where the masking device 70 may be formed by combining of the masking device 20b and the comb 30 of the gel casting assembly 10 into one unit. The masking device 70 may be made of a single or multi-piece molded assembly that can clip onto or slide onto the top of the gel casting assembly 10 of FIGS. 3 and 4 by means of attachment points 50. The masking device 70 may have one or more teeth 80 and preferably 10 teeth, 12 teeth, or 15 teeth. The masking device 70 illustrated in FIG. 8 may be constructed of any material that is configured to prevent light from photopolymerizing the gel, such as, but not limited to, metal, paper, or plastic. In some embodiments, the masking device 70 may be constructed such that a user can see through the masking device 70 (i.e., the masking device 70 is at least partially transparent) in order to ensure the user has visual confirmation of the teeth 80 when pouring the gel into gel casting assembly 10.

As shown in FIGS. 1 through 8, the comb 30 is operably associating with a gel casting assembly 10 for forming sample wells in the electrophoretic separation medium in accordance with certain embodiments. In the embodiments shown, the comb 30 includes a plurality of spaced fingers or teeth 40. There are ten teeth 30 in the embodiment shown in FIGS. 2, 4, and 8, although those skilled in the art will appreciate that more or fewer teeth 30 may be suitable, depending upon the number of sample wells desired to be formed in the electrophoretic separation medium. Preferably each of the teeth 30 extends from the body of the comb 30 in the same direction and to the same extent, is of the same size and shape (generally rectangular), and terminates in a free end. Proper positioning of the comb 30 into the gel casting assembly 10 results in the teeth 30 extending into the electrophoretic gel, which enables the formation of tooth-shaped wells in the electrophoretic gel to form well shapes matching the shape of the teeth 40. That is, upon photopolymerization of the medium, the teeth 40 serve to occupy regions that the medium would otherwise occupy, so that upon photopolymerization of the medium and subsequent removal of the comb 30, regions devoid of photopolymerized medium remain and define the wells for introduction of a sample to be subjected to electrophoresis. The comb 30 is sized to provide a friction fit within the gel casting assembly 10 so that the user can insert the comb 30 into the gel casting assembly 10 in a matter that provide the least amount of gel material from being trapped between the comb 30 and the interior walls of the gel casting assembly 10. Suitable materials of construction for the comb 30 include those compatible with gel casting solutions such as, but not limited to, polycarbonate plastics, glass, and/or paper. As previously explained, the masking devices 20, 20a, 20b, 70 may be constructed from any material that is configured to prevent light from passing through the masking device 20 and photopolymerizing the electrophoretic gel. The masking devices 20, 20a, 20b, 70 may be constructed of an ultra-violet blocking ("UV") polyester, a UV blocking acrylic, a UV blocking color filter film, or a polarizing film of any material that prevents the photopolymerizing of the electrophoretic gel. It should be obvious to one skilled in the art that the masking device 20, 20a, 20b, 70 can be constructed in such a manner that any wavelength light including light in the visible spectrum can be prevented from passing through the masking device 20, 20a, 20b, 70 should that light be capable of photopolymerizing the electrophoretic gel. Further, the masking device 20, 20a, 20b, 70 may be constructed of a UV blocking epoxy mask which could be attached to the gel casting assembly 10, printed directly onto the gel casting assembly 10, or, in other embodiments, printed directly onto the comb 30. In these embodiments, the masking device 20, 20a, 20b, 70 is sized to provide a friction fit with the gel casting assembly 10 and/or the comb 30. The masking device 20 illustrated in FIGS. 1, 2, and 5 may be constructed further of an optical coating attached to the gel casting device 10, for example, a vapor deposited optical coating. Additionally, the masking device 20 illustrated in FIGS. 1, 2, and 5 may be an etched pattern on the gel casting device 10, such as, but not limited to, a photo or laser etched pattern matching the comb 30 or an acid etch on the gel casting assembly 10 to match the tooth 40 configuration of the comb 30.

The masking device 20, 20a, 20b, 70 of FIGS. 1 through 8 may be made a permanent portion of the gel casting assembly 10, or may be made to be reusable with other gel casting assemblies 10.

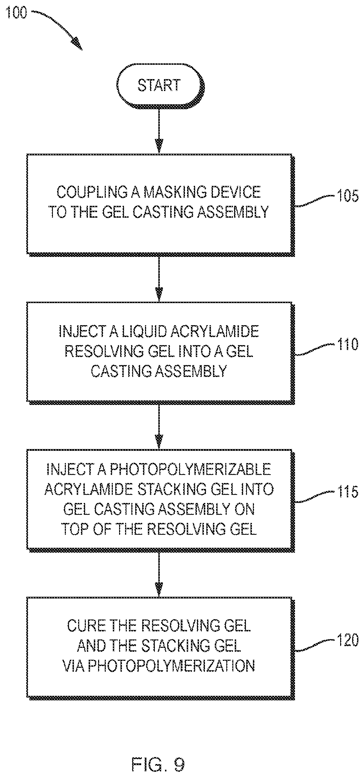

Turning to FIG. 9, illustrated is a method 100 for utilizing one of the embodiments of the masking device 20, 20a, 20b, 70 disclosed above. At step 105, the masking device 20, 20a, 20b, 70 is coupled to a gel casting assembly 10. The gel casting assembly 10 may include a comb 30, as previously explained, that is operably associated with a gel casting assembly 10 for forming sample wells in the electrophoretic separation medium in accordance with certain embodiments. The masking device 20, 20a, 20b, 70 may be coupled to the gel casting assembly 10 via any of the methods or attaching means explained above. At step 110, a liquid acrylamide resolving gel is injected into the gel casting assembly 10. Then, at step 115, a photopolymerizable acrylamide stacking gel is injected into the gel casting assembly 10 on top of the resolving gel. At step 120, the resolving gel and the stacking gel are cured via photopolymerization. With the masking device 20, 20a, 20b, 70 being coupled to the gel casting assembly 10, the masking device 20, 20a, 20b, 70 prevents photopolymerization of a portion of the stacking gel disposed inside a portion of the gel casting assembly 10, and, specifically, the portion of the stacking gel disposed between the gel casting assembly 10 and the comb teeth of the comb 30.

It is to be understood that terms such as "left," "right," "top," "bottom," "front," "rear," "side," "height," "length," "width," "upper," "lower," "interior," "exterior," "inner," "outer" and the like as may be used herein, merely describe points of reference and do not limit the present invention to any particular orientation or configuration. Further, the term "exemplary" is used herein to describe an example or illustration. Any embodiment described herein as exemplary is not to be construed as a preferred or advantageous embodiment, but rather as one example or illustration of a possible embodiment of the invention. Additionally, it is also to be understood that the components of the gel casting assembly described herein, the masking device described herein, and/or portions thereof may be fabricated from any suitable material or combination of materials, such as, but not limited to, thermoplastics, plastics, or metals (e.g., copper, bronze, aluminum, steel, etc.), as well as derivatives thereof, and combinations thereof. In addition, it is further to be understood that the steps of the methods described herein may be performed in any order or in any suitable manner.

Finally, when used herein, the term "comprises" and its derivations (such as "comprising," etc.) should not be understood in an excluding sense, that is, these terms should not be interpreted as excluding the possibility that what is described and defined may include further elements, steps, etc. Similarly, where any description recites "a" or "a first" element or the equivalent thereof, such disclosure should be understood to include incorporation of one or more such elements, neither requiring nor excluding two or more such elements. Meanwhile, when used herein, the term "approximately" and terms of its family (such as "approximate," etc.) should be understood as indicating values very near to those which accompany the aforementioned term. That is to say, a deviation within reasonable limits from an exact value should be accepted, because a skilled person in the art will understand that such a deviation from the values indicated is inevitable due to measurement inaccuracies, etc. The same applies to the terms "about," "around," "generally," and "substantially."

## Claims

1. An assembly comprising:
(a) a gel casting assembly (10) that includes a comb (30) having one or more comb teeth (40) for forming sample wells; and being **characterized by**
(b) a masking device (20, 20a, 20b, 70) for enhancing a fidelity of sample wells of a photopolymerized electrophoretic gel contained in the gel casting assembly (10), the masking device (20, 20a, 20b, 70) comprising a light blocking agent coupled to the gel casting assembly (10);
wherein the light blocking agent overlaps with the comb teeth (40) to prevent photopolymerization of any portion of an electrophoretic gel contained between the comb teeth (40) and an inner surfaces of the gel casting assembly (10); and
where upon removal of the comb (30) after photopolymerization of the electrophoretic gel, the sample wells remain uniform.

2. The assembly according to claim 1, wherein the light blocking agent includes one or more teeth (60) that are configured to align the one or more comb teeth (40), and wherein the one or more teeth (60) of the light blocking agent prevent photopolymerization of a portion of the electrophoretic gel contained between the comb teeth (40) and the inner surfaces of the gel casting assembly (10).

3. The assembly according to claim 1 or 2, wherein the comb (30) is removably located in or on the gel casting assembly (10).

4. The assembly of claim 1 or 2, wherein the masking device (20, 20a, 20b, 70) is reusable.

5. The assembly of claim 1 or 2, wherein the comb has 10, 12, or 15 teeth.

6. The assembly of claim 1 or 2, wherein the masking device (20, 20a, 20b, 70) is sized to provide a friction fit with the gel casting assembly (10).

7. The assembly of claim 6, wherein any one of:
(a) the masking device (20) adheres to an outer surface of the gel casting assembly (10) via an adhesive or electroadhesion;
(b) the masking device (20a, 20b) mechanically adheres to an outside of the gel casting assembly (10); and
(c) the masking device (20, 20a, 20b, 70) is made from a transparent or opaque material.

8. The assembly of claim 1, wherein the masking device (20, 20a, 20b, 70) blocks ultra-violet light.

9. The assembly of claim 8, where the masking device (20) is a light blocking film, a coating, or an etching on or in the gel casting assembly.

10. The assembly of claim 9, wherein the light blocking film is a light blocking polyester, acrylic, color filter film, or polarizing film and, optionally, wherein the light blocking film is a printed light blocking epoxy mask.

11. The assembly of claim 9, wherein the masking device (20) is a vapor deposited optical coating.

12. The assembly of claim 1, wherein the masking device (20) is a laser or acid etched pattern.

13. A method of curing a photopolymerized electrophoretic gel comprising:
coupling a masking device (20, 20a, 20b) to a gel casting assembly (10);
injecting a liquid acrylamide resolving gel into the gel casting assembly (10);
further injecting a photopolymerizable acrylamide stacking gel into gel casting assembly (10) on top of the resolving gel;
curing the resolving gel and the stacking gel via photopolymerization means; and
wherein the masking device (20, 20a, 20b, 70) prevents photopolymerization of the stacking gel inside a portion of the gel casting assembly (10) in order to enhance a fidelity of sample wells of the photopolymerized electrophoretic gel in the gel casting assembly (10).

14. The method of claim 13, wherein the masking device (20, 20a, 20b, 70) is located on an outer surface of the gel casting assembly (10).

15. The method of claim 13,
wherein the masking device (20) is located within the gel casting assembly (10).

## Patentansprüche

1. Anordnung, umfassend:
(a) eine Gelgießanordnung (10), die einen Kamm (30) einschließt, der einen oder mehrere Kammzähne (40) zum Ausbilden von Probenvertiefungen aufweist; und **gekennzeichnet durch**
(b) eine Maskierungsvorrichtung (20, 20a, 20b, 70) zum Verbessern einer Genauigkeit von Probenvertiefungen eines photopolymerisierten elektrophoretischen Gels, das in der Gelgießanordnung (10) enthalten ist, die Maskierungsvorrichtung (20, 20a, 20b, 70) umfassend ein lichtblockierendes Mittel, das an die Gelgießanordnung (10) gekoppelt ist;
wobei das lichtblockierende Mittel mit den Kammzähnen (40) überlappt, um eine Photopolymerisation eines beliebigen Anteils eines elektrophoretischen Gels zu verhindern, das zwischen den Kammzähnen (40) und einer Innenoberfläche der Gelgießanordnung (10) enthalten ist; und
wobei nach einem Entfernen des Kamms (30) nach der Photopolymerisation des elektrophoretischen Gels die Probenvertiefungen gleichmäßig bleiben.

2. Anordnung nach Anspruch 1, wobei das lichtblockierende Mittel einen oder mehrere Zähne (60) einschließt, die konfiguriert sind, um den einen oder die mehreren Kammzähne (40) auszurichten, und wobei der eine oder die mehreren Zähne (60) des lichtblockierenden Mittels die Photopolymerisation eines Anteils des elektrophoretischen Gels verhindern, das zwischen den Kammzähnen (40) und den Innenoberflächen der Gelgießanordnung (10) enthalten ist.

3. Anordnung nach Anspruch 1 oder 2, wobei der Kamm (30) entfernbar in oder an der Gelgießanordnung (10) angeordnet ist.

4. Anordnung nach Anspruch 1 oder 2, wobei die Maskierungsvorrichtung (20, 20a, 20b, 70) wiederverwendbar ist.

5. Anordnung nach Anspruch 1 oder 2, wobei der Kamm 10, 12 oder 15 Zähne aufweist.

6. Anordnung nach Anspruch 1 oder 2, wobei die Maskierungsvorrichtung (20, 20a, 20b, 70) bemessen ist, um eine Reibpassung mit der Gelgießanordnung (10) bereitzustellen.

7. Anordnung nach Anspruch 6, wobei ein beliebiges gilt von:
(a) die Maskierungsvorrichtung (20) klebt mittels eines Klebstoffs oder Elektroadhäsion an einer Außenoberfläche der Gelgießanordnung (10);
(b) die Maskierungsvorrichtung (20a, 20b) klebt mechanisch an einer Außenseite der Gelgießanordnung (10); und
(c) die Maskierungsvorrichtung (20, 20a, 20b, 70) ist aus einem transparenten oder undurchsichtigen Material hergestellt.

8. Anordnung nach Anspruch 1, wobei die Maskierungsvorrichtung (20, 20a, 20b, 70) ultraviolettes Licht blockiert.

9. Anordnung nach Anspruch 8, wobei die Maskierungsvorrichtung (20) eine lichtblockierende Folie, eine Beschichtung oder eine Ätzung auf oder in der Gelgießanordnung ist.

10. Anordnung nach Anspruch 9, wobei die lichtblockierende Folie eine lichtblockierende Polyester-, Acryl-, Farbfilterfolie oder Polarisationsfolie ist und, optional, wobei die lichtblockierende Folie eine gedruckte lichtblockierende Epoxidmaske ist.

11. Anordnung nach Anspruch 9, wobei die Maskierungsvorrichtung (20) eine aufgedampfte optische Beschichtung ist.

12. Anordnung nach Anspruch 1, wobei die Maskierungsvorrichtung (20) ein laser- oder säuregeätztes Muster ist.

13. Verfahren zum Härten eines photopolymerisierten elektrophoretischen Gels, umfassend:
Koppeln einer Maskierungsvorrichtung (20, 20a, 20b) mit einer Gelgießanordnung (10);
Einspritzen eines flüssigen Acrylamidtrenngels in die Gelgießanordnung (10);
ferner Injizieren eines photopolymerisierbaren Acrylamidsammelgels in die Gelgießanordnung (10) auf das Trenngel;
Härten des Trenngels und des Sammelgels mittels Photopolymerisationsmitteln; und
wobei die Maskierungsvorrichtung (20, 20a, 20b, 70) die Photopolymerisation des Sammelgels im Innern eines Anteils der Gelgießanordnung (10) verhindert, um eine Genauigkeit von Probenvertiefungen des photopolymerisierten Elektrophoresegels in der Gelgießanordnung (10) zu verbessern.

14. Verfahren nach Anspruch 13, wobei sich die Maskierungsvorrichtung (20, 20a, 20b, 70) an einer Außenoberfläche der Gelgießanordnung (10) befindet.

15. Verfahren nach Anspruch 13, wobei sich die Maskierungsvorrichtung (20) innerhalb der Gelgießanordnung (10) befindet.

## Revendications

1. Ensemble comprenant :
a) un ensemble de coulée de gel (10) qui comporte un peigne (30) ayant une ou plusieurs dents de peigne (40) pour former des puits d'échantillon ; et étant **caractérisé par**
(b) un dispositif de masquage (20, 20a, 20b, 70) pour améliorer une fidélité de puits d'échantillon d'un gel électrophorétique photopolymérisé contenu dans l'ensemble de coulée de gel (10), le dispositif de masquage (20, 20a, 20b, 70) comprenant un agent de blocage de lumière accouplé à l'ensemble de coulée de gel (10) ;
dans lequel l'agent de blocage de lumière chevauche les dents de peigne (40) pour empêcher la photopolymérisation de toute partie d'un gel électrophorétique contenu entre les dents de peigne (40) et une surface interne de l'ensemble de coulée de gel (10) ; et
où, lors du retrait du peigne (30) après photopolymérisation du gel électrophorétique, les puits d'échantillon restent uniformes.

2. Ensemble selon la revendication 1, dans lequel l'agent de blocage de lumière comporte une ou plusieurs dents (60) qui sont conçues pour aligner la ou les dents de peigne (40), et dans lequel la ou les dents (60) de l'agent de blocage de lumière empêchent la photopolymérisation d'une partie du gel électrophorétique contenu entre les dents de peigne (40) et les surfaces intérieures de l'ensemble de coulée de gel (10).

3. Ensemble selon la revendication 1 ou 2, dans lequel le peigne (30) est situé de manière amovible dans ou sur l'ensemble de coulée de gel (10).

4. Ensemble selon la revendication 1 ou 2, dans lequel le dispositif de masquage (20, 20a, 20b, 70) est réutilisable.

5. Ensemble selon la revendication 1 ou 2, dans lequel le peigne a 10, 12 ou 15 dents.

6. Ensemble selon la revendication 1 ou 2, dans lequel le dispositif de masquage (20, 20a, 20b, 70) est dimensionné pour fournir un ajustement par friction avec l'ensemble de coulée de gel (10).

7. Ensemble selon la revendication 6, dans lequel l'un parmi :
(a) le dispositif de masquage (20) adhère à une surface extérieure de l'ensemble de coulée de gel (10) par l'intermédiaire d'un adhésif ou d'une électroadhérence ;
(b) le dispositif de masquage (20a, 20b) adhère mécaniquement à un extérieur de l'ensemble de coulée de gel (10) ; et
(c) le dispositif de masquage (20, 20a, 20b, 70) est fabriqué à partir d'un matériau transparent ou opaque.

8. Ensemble selon la revendication 1, dans lequel le dispositif de masquage (20, 20a, 20b, 70) bloque la lumière ultraviolette.

9. Ensemble selon la revendication 8, le dispositif de masquage (20) étant un film bloquant la lumière, un revêtement ou une gravure sur ou dans l'ensemble de coulée de gel.

10. Ensemble selon la revendication 9, dans lequel le film bloquant la lumière est un polyester, acrylique, un film filtrant de couleur, ou un film polarisant bloquant la lumière et, éventuellement, dans lequel le film bloquant la lumière est un masque époxy bloquant la lumière imprimé.

11. Ensemble selon la revendication 9, dans lequel le dispositif de masquage (20) est un revêtement optique déposé en phase vapeur.

12. Ensemble selon la revendication 1, dans lequel le dispositif de masquage (20) est un motif gravé au laser ou à l'acide.

13. Procédé de durcissement d'un gel électrophorétique photopolymérisé comprenant :
l'accouplement d'un dispositif de masquage (20, 20a, 20b) à un ensemble de coulée de gel (10) ;
l'injection d'un gel de résolution d'acrylamide liquide dans l'ensemble de coulée de gel (10) ;
l'injection en outre d'un gel d'empilement d'acrylamide photopolymérisable dans l'ensemble de coulée de gel (10) sur le gel de résolution ;
le durcissement du gel de résolution et du gel d'empilement par l'intermédiaire de moyens de photopolymérisation ; et
dans lequel le dispositif de masquage (20, 20a, 20b, 70) empêche la photopolymérisation du gel d'empilement à l'intérieur d'une partie de l'ensemble de coulée de gel (10) afin d'améliorer la fidélité des puits d'échantillon du gel électrophorétique photopolymérisé dans l'ensemble de coulée de gel (10).

14. Procédé selon la revendication 13, dans lequel le dispositif de masquage (20, 20a, 20b, 70) est situé sur une surface extérieure de l'ensemble de coulée de gel (10).

15. Procédé selon la revendication 13, dans lequel le dispositif de masquage (20) est situé à l'intérieur de l'ensemble de coulée de gel (10).
